# EUROPEAN PATENT SPECIFICATION

(11) **EP 3 961 324 B1**
(45) Date of publication and mention of the grant of the patent: **27.03.2024**
(21) Application number: 20193021.1
(22) Date of filing: 27.08.2020
(51) Int. Cl.: G05B 19/418

(54) **A COMPUTERIZED SYSTEM FOR MANAGING PERSONNEL'S MOVEMENTS IN AN INDUSTRIAL PLANT**
COMPUTERGESTÜTZTES SYSTEM ZUR VERWALTUNG VON PERSONENBEWEGUNGEN IN EINER INDUSTRIELLEN ANLAGE
PROCÉDÉ INFORMATISÉ ET SYSTÈME DE GESTION DE MOUVEMENTS DU PERSONNEL DANS UNE INSTALLATION INDUSTRIELLE

(43) Date of publication of application: 02.03.2022
(73) Proprietor: ABB Schweiz AG, 5400 Baden (CH)
(72) Inventor: Cortinovis, Andrea, 5415 Rieden (AG) (CH); Lymperopoulos, Ioannis, 8953 Dietikon (CH); Mercangoez, Mehmet, 4332 Stein (CH); Ganz, Christopher, 8046 Zürich (CH)
(74) Representative: De Bortoli, Eros

(56) References cited:
- US-A1- 2015 102 936
- US-A1- 2016 132 046
- US-A1- 2019 147 655

## Description

The present invention relates to a computerized system for managing personnel's movements in an industrial plant.

As is known, industrial plants comprise a variety of pieces of equipment, which regularly need maintenance or inspection interventions.

Typically, technicians appointed to carry out maintenance or inspection interventions are not familiar with the physical layout of the industrial plant in which they have to operate.

On the other hand, finding a certain piece of equipment or a certain place in an unknown industrial plant is not always easy, especially if such a facility is large and many machines or apparatuses are installed and operate.

Normally, maintenance technicians have to use a map to orientate themselves in an industrial plant. Nonetheless, often, they have to ask local operators for help to reach the desired piece of equipment or place.

As it is easy to understand, this way of doing is rather uncomfortable, time-consuming and inefficient.

Inexperienced operators may take a lot of time to reach their target points in the industrial plant and they may interfere with the activity of local operators.

Additionally, they may inadvertently have access to dangerous or restricted areas of the industrial plant or cross routes dedicated to AGVs (Automatic Guided Vehicles), which may be quite prejudicial to their safety.

In the state of the art, there is the need for solutions providing an efficient and safe management of personnel's movements (e.g. when carrying out maintenance or inspection interventions) in industrial plants.

US 2015/0102936 A1, US 2019/0147655 A1, and US 2016/0132046 A1 disclose devices and systems for guidance and navigation in industrial facilities.

In order to respond to this need, the present invention provides a computerized system for managing personnel's movements in an industrial plant, according to the following claim 1 and the related dependent claims.

According to some embodiments, the above-mentioned user-interface unit comprises a haptic user-interface.

According to some embodiments, the above-mentioned user-interface unit comprises a visual user-interface.

Preferably, said visual interface device is an augmented-reality user-interface or a virtual-reality user-interface.

According to some embodiments, the above-mentioned user-interface unit comprises an acoustic user-interface.

Preferably, in operation, the computerized platform provides second guiding information to the control unit of each navigation device in order to guide the user of said navigation device to carry out an intervention on a piece of equipment of said industrial plant.

Preferably, in operation, the control unit of said navigation device commands the user-interface unit of said navigation device to display said second guiding information on said visual interface.

Preferably, each navigation device comprises one or more biometric sensors adapted to provide said control unit with detection data indicative of the physical conditions of the user of said navigation device. In operation, said control unit transmits said detection data to the computerized platform.

Preferably, the control unit of each navigation device is capable of communicating in a wireless mode with the control unit of another navigation device.

Preferably, the control unit of each navigation device is capable of communicating in a wireless mode with a computerized device (local access point) installed on a piece of equipment of said industrial plant.

Preferably, the computerized platform is configured to monitor the position of a user wearing a navigation device basing on position data received from a locating system interacting with said navigation device and said computerized platform.

Preferably, the computerized platform is configured to plan a route to be followed by a user wearing a navigation device basing on operation data indicative of the characteristics of the industrial plant received from a computerized system of said industrial plant.

Preferably, the computerized platform is configured to plan a route to be followed by a user wearing a navigation device basing on job scheduling data received from a scheduling system of said industrial plant.

Preferably, the computerized platform is configured to plan a route to be followed by a user wearing a navigation device basing on tracking data indicative of the movements of other personnel and of the movements possible AGVs (Automatic Guided Vehicles) operating in said industrial plant.

Preferably, the computerized platform is configured to modify in real time (i.e. with a short latency time, e.g. some seconds) a planned route to be followed by a user wearing a navigation device basing on monitoring data indicative of the operating conditions of said industrial plant.

Further characteristics and advantages of the invention will emerge from the description of preferred, but not exclusive embodiments of the method, according to the invention, non-limiting examples of which are provided in the attached drawings, wherein:

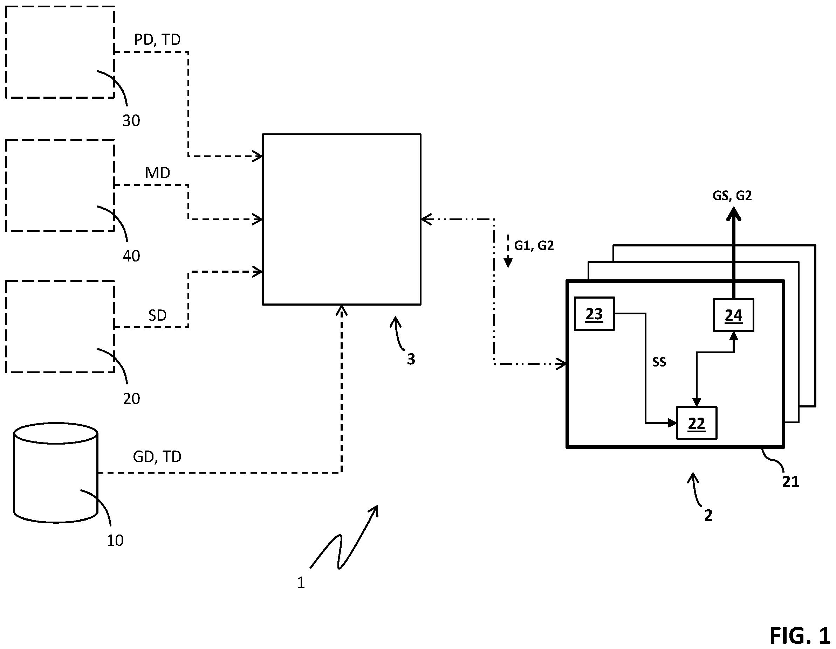

- Figure 1 schematically shows the computerized system, according to the invention;
- Figures 2-4 schematically show some embodiments of a navigation device of the computerized system, according to the invention;
- Figures 5-6 schematically show examples of operation of the computerized system, according to the invention.

With reference to the cited figures, the present invention relates to a computerized system 1 for managing personnel's movements in an industrial plant 100.

The computerized system 1 may be conveniently used in industrial plants of different types, such as process plants, electric power generation plants, manufacturing plants and the like.

However, the computerized system 1 may be conveniently used in contexts of different type, such as hospitals, building sites, data centers, and the like.

In general, the industrial plant may be an indoor industrial plant or an outdoor industrial plant or an industrial plant having both indoor and outdoor areas.

According to the invention, the computerized system 1 comprises one or more navigation devices 2, each of which is wearable by a user accessing to the industrial plant.

Preferably, a navigation device 2 comprises a support structure 21 mechanically supporting or accommodating other components of the navigation device.

The support structure 21 is wearable by a user or it is mechanically couplable to a product item wearable by a user. As an example, the support structure 21 may be a protection helmet structure, a glass frame structure, a belt, a t-shirt, a shoe or the like.

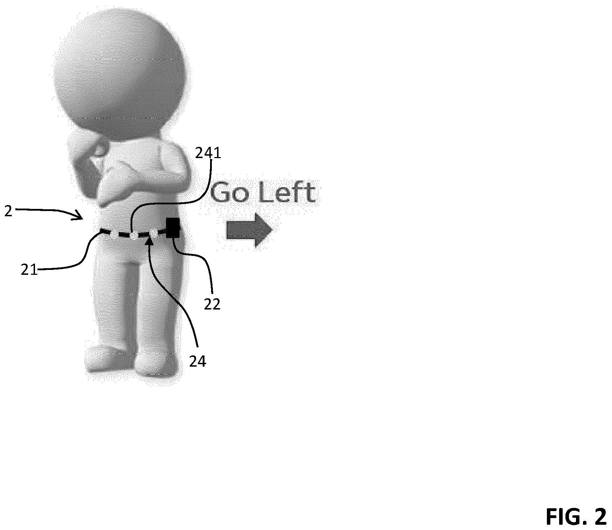

Figure 2 schematically shows an embodiment of a navigation device according to the invention. In this case, the support structure 21 is arranged so as to be wearable by a user like a belt.

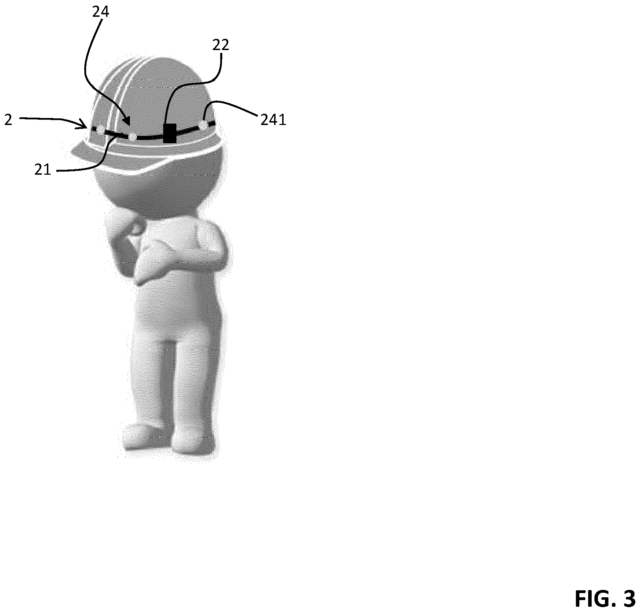

In the embodiment schematically shown in figure 3, the support structure 21 of the navigation device 2 is formed by a structure fixed on a surface of a helmet wearable by a user.

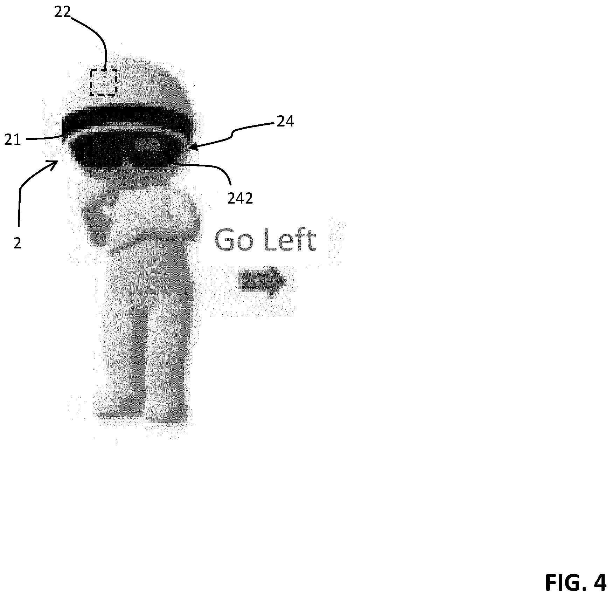

In figure 4, it is schematically shown an embodiment of the invention, in which the support structure 21 of the navigation device 2 is formed by a helmet structure wearable by a user.

Other variant embodiments are possible, according to the needs. For example, in certain applications, the support structure 21 may be mechanically couplable to a hexo-skeleton worn by the user for operating in the industrial plant.

The navigation device 2 comprises an electronic control unit 22 and an electronic user-interface unit 24 operatively coupled with said control unit.

Preferably, the control unit 22 comprises at least a digital processing device, for example a microprocessor, capable of carrying out appropriate software instructions stored in a memory medium to implement the functionalities provided for said control unit.

The control unit 22 is capable of communicating in wireless mode with an external computerized entity in remote position with respect to the navigation device 2. To this aim, the control unit may comprise one or more communication modules (not shown) for wireless communication with remote computerized platforms or systems. Conveniently, said communication modules may operate according to known communication protocols, e.g. a TCP/IP^{™}, Fieldbus^{™}, or the like. Preferably, the control unit 22 comprises also a communication module for communication with a GPS system or a similar localization system.

The control unit 22 is capable of communicating in wireless mode with an external computerized entity in proximal position with respect to the navigation device 2.

To this aim, the control unit 22 may comprise one or more communication modules (not shown) for proximity communication with computerized devices or platforms. Conveniently, said communication modules may operate according to known communication protocols, e.g. Bluetooth^{™}, Lora^{™}, Wi-Fi^{™}, Zigbee^{™} or the like.

In general, communications between the control unit 22 and an external computerized entity (e.g. a remote computerized system or a proximal computerized device) may occur according to known procedures widely used in communications between electronic systems. These communication procedures will not be described here in further details for the sake of brevity.

In general, the user-interface unit 24 is adapted to provide the user with perceivable guiding signals GS configured in such a way to direct the user according to predefined directions (e.g. right, left, straight forward, straight back).

Preferably, the user-interface unit 24 is controlled by the control unit 22 and it provides the guiding signals GS in response to receiving suitable control signals from said control unit.

According to some embodiments of the invention, examples of which are schematically shown in figures 2-3, the user-interface unit 24 comprises a haptic user-interface, which includes a plurality of emitters 241 arranged in such a way to be distributed in different predefined positions when the navigation device is worn by the user.

Each emitter 241 is conveniently capable of providing a physical feedback to a corresponding different body portion of the user and it is activated to provide said physical feedback when the user has to be addressed along a direction corresponding to the position of said emitter.

Physical feedbacks provided by the above-mentioned emitters 241 may be of different type, e.g. vibration feedbacks, pressure feedbacks, force feedbacks, ultrasound feedbacks, air vortex feedbacks, heating or cooling feedbacks, and the like.

Preferably, the user-interface unit 24 comprises a driver module (not shown) for driving the emitters 241 upon receiving the above-mentioned control signals from the control unit 22. Such a driver module may include a dedicated digital processing device to process the control signals coming from the control unit 22.

Figure 2 schematically shows an example of operation of the user-interface unit 24, according to the above-illustrated embodiment of the invention.

In this example, the user-interface device 24 comprises multiple vibration emitters 241 arranged on a belt structure 21 (forming the wearable supporting structure of the user-interface unit) in such a way to be distributed along the waistline of the user.

If the user is requested to go towards a certain direction (e.g. left as shown in figure 2), the control unit 22 activates an emitter 241 positioned on a corresponding position (e.g. on a left side) of the band structure 21. The activated emitter 241 vibrates thereby providing the user with a corresponding guiding signal GS (in the form of a physical feedback), which directs the user towards the desired direction.

Apparently, the physical feedbacks provided to the user by the emitters 241 form the guiding signals GS made available to the user by the user-interface unit 24, in accordance to the invention. According to some embodiments of the invention, an example of which is schematically shown in figure 4, the user-interface unit 24 comprises a visual user-interface including a display 242 that can be observed by the user.

The display 242 provides visible guiding signals GS (e.g. light arrows) addressing the user towards predefined corresponding directions.

Preferably, the user-interface interface 24 comprises a driver module (not shown) for driving the display 242 upon receiving the above-mentioned control signals from the control unit 22. Such a driver module may include a dedicated digital processing device to process the control signals coming from the control unit 22.

Figure 4 schematically shows an example of operation of the user-interface unit 24, according to the above-illustrated embodiments of the invention.

In the illustrated example, the user-interface device 24 comprises a display 242 arranged on a helmet 21 (forming the wearable supporting structure of the user-interface unit) in such a way to cover, at least partially, the user's eyes.

If the user is requested to go towards a certain direction (e.g. left as shown in figure 4), the control unit 22 commands the display 242 to show a corresponding light sign (e.g. a light arrow) visible to the user and addressing this latter towards the desired direction.

The visible signals provided to the user by the display 242 form the guiding signals GS made available by the user-interface unit 24, in accordance to the invention.

According to possible variants of the embodiment of figure 4, the user-interface device 24 comprises an augmented-reality display 242 capable of showing augmented-reality objects (e.g. light signs visible by a user) overlapped to images of the environment surrounding the user. In this case, in addition to the above-mentioned control signals, the control unit 22 conveniently provides the display 242 with augmented-reality display data to allow the user to visualize said augmented-reality objects when looking to certain areas of the surrounding environment.

According to other possible variants of the embodiment of figure 4, the user-interface device 24 comprises a virtual-reality display 242 capable of showing graphic objects (e.g. light signs visible by a user) in a virtual environment simulating the environment surrounding the user. In this case, in addition to the above-mentioned control signals, the control unit 22 conveniently provides the display 242 with virtual-reality display data to allow the user to visualize said virtually simulated environment.

According to other embodiments of the invention (not shown), the user-interface unit 24 comprises an acoustic user-interface including a sound emitter for emitting acoustic signals that can be heard by the user.

Such an acoustic emitter provides audible guiding signals GS (e.g. acoustic commands like "right", "left", and so on) addressing the user towards predefined corresponding directions.

Preferably, the user-interface interface 24 comprises a driver module (not shown) for driving the above-mentioned acoustic emitter upon receiving the above-mentioned control signals from the control unit 22. Such a driver module may include a dedicated digital processing device to process the control signals coming from the control unit 22.

If the user is requested to go towards a certain direction (e.g. left as shown in figure 4), the control unit 22 commands the acoustic emitter to provide a suitable acoustic command (e.g. "go left") audible by the user and addressing this latter towards the desired direction.

The acoustic commands provided to the user by the above-mentioned acoustic emitter form the guiding signals GS made available by the user-interface unit 24, in accordance to the invention.

According to the invention, the computerized system 1 comprises a computerized platform 3.

The computerized platform 3 can advantageously comprise one or more computerized units interacting one with another and including suitable computerized resources to implement the functionalities provided for the computerized platform. These computerized resources may include, for example, appropriate software application modules executable by said computerized units for implementing the requested functionalities.

The computerized platform 3 is capable of communicating in a wireless mode with the navigation devices 2 of the computerized system. To this aim, the computerized platform 3 may conveniently comprise one or more wireless communication modules (not shown), which may operate according to known proximity communication protocols, e.g. Bluetooth^{™}, Lora^{™}, Wi-Fi^{™}, Zigbee^{™} or the like.

The computerized platform 3 is capable of communicating in wired or wireless mode with remote computerized systems or platforms. To this aim, it may conveniently comprise one or more communication modules (not shown), which operate according to known communication protocols, e.g. TCP/IP^{™}, Fieldbus^{™}, or the like.

In general, communications between the computerized platform 3 and an external computerized entity (e.g. a remote computerized system or a navigation device 2) may occur according to known procedures widely used in communications between electronic systems. These communication procedures will not be described here in further details for the sake of brevity.

According to the invention, the computerized platform 3 is configured to control and coordinate the operation of the navigation devices 2 in order to guide the users of said navigation devices through the industrial plant.

The computerized platform 3 is configured to provide the control unit 22 of each navigation device 2 with first guiding information G1 to guide the user along a planned route through the industrial plant.

The control unit 22 of the navigation device 2 is configured to command, basing on the first guiding information G1, the user-interface unit 24 to provide the user with suitable guiding signals GS, which are configured according to a sequential order in such a way to direct the user of the navigation device along the planned route.

Preferably, the computerized platform 3 provides the first guiding information G1 to a navigation device 2 while such a navigation device is in use. In this case, when it is worn by a user, the control unit 22 of the navigation device 2 is in continuous communication with the computerized platform 2 in such a way to receive the first guiding information G1 and command the user-interface unit 24 to provide the guiding signals GS basing on said guiding information.

As an alternative, the computerized platform 3 may provide the first guiding information G1 to a navigation device 2 before this latter is used. In this case, when it is used, the control unit 22 of the navigation device 2 does not have to be in continuous communication with the computerized platform 2 (off-line mode).

In order to download the first guiding information G1 to the navigation device 2, the control unit 2 may communicate with the computerized platform 3 at a dedicated time slot (asynchronous communication), when it is not worn by a user.

Basing on the guiding information G1 downloaded from the computerized platform 3, the control unit 22 commands the user-interface unit 24 to provide the guiding signals GS, when the navigation device 2 is used.

When a navigation device 2 operates in the above-mentioned off-line mode, the computerized platform 3 sends suitable trigger commands to said navigation device depending on the position reached by the user. In this way, the navigation device 2 can provide the user with the guiding signals GS in a synchronized manner with respect the actual position of this latter.

As an alternative, the navigation device 2 may communicate (through proximity communications) with local access points (local computerized devices installed on pieces of equipment) to receive the above-mentioned trigger commands depending on the position reached by the user.

Preferably, when a navigation device 2 is provided with a user-interface unit 24 including a display 242, the computerized platform 3 may provide the control unit 22 of said navigation device 2 with second guiding information G2 in order to guide the user of said navigation device to carry out an intervention on a piece of equipment of the industrial plant.

In this case, the control unit 22 commands the user-interface unit 24 to make available the guiding information G2 to the user on the display 242.

Preferably, a navigation device 2 comprises one or more biometric sensors 23 operatively coupled with the control unit 22 and adapted to provide said control unit with detection data SS indicative of the physical conditions of the user of said navigation device. Conveniently, the control unit 22 is configured to transmit the detection data SS to the computerized platform 3.

This solution is quite advantageous as it allows the control platform 3 to acquire information about the actual physical conditions of the user of the navigation device, which may be quite useful to increase the safety level of the personnel operating in the industrial plant.

According to some embodiments of the invention, the control unit 22 of a navigation device 2 is capable of communicating in a wireless mode with the control unit of another navigation device and/or with computerized devices (e.g. local access points) installed on pieces of equipment of the industrial plant, e.g. on specific apparatuses or AGVs.

This solution is quite advantageous as it allows a navigation device 2 to receive alert signals directly from the surrounding environment, which may be quite useful to allow the user to move efficiently and safely through the industrial plant, for example avoiding restricted or dangerous areas or preventing collisions with other users or machines operating in the industrial plant, in particular AGVs.

According to an aspect of the invention, the computerized platform 3 is configured to monitor the position of a user wearing a navigation device 2.

Preferably, the computerized platform 3 is capable of communicating with a locating system 30 adapted to provide position data PD indicative of the position of the navigation devices 2.

The locating system 30 may be of any type, according to the needs.

As an example, it may be an indoor locating system, e.g. a UWB (Ultra-Wide Band) locating system including a number of fixed antennas capable of communicating with the navigation devices. If the industrial plant includes outdoor areas, the position detection system 30 may be a GPS system or a similar locating system for outdoor applications. Obviously, when possible, a GPS system may be used as a locating system 30 also for indoor applications of the present invention.

Preferably, the navigation devices 2 are capable of communicating with the locating system 30 in such a way to allow this latter to collect the position data PD related to the position of said devices and intended to be transmitted to the computerized platform 3.

As mentioned above, the main functionality of the computerized platform 3 is coordinating the operation of the navigation devices worn by users accessing to the industrial plant.

To this aim, the computerized platform 3 is configured to plan the route to be followed by a user of each navigation device 2.

The computerized platform 3 may carry out such a route planning activity in real time, while the navigation device 2 is in use. Preferably, however, the computerized platform 3 plans the route to be followed by a user, before the corresponding navigation device is actually used.

Preferably, the computerized platform 3 is configured to plan the route to be followed by the user of a navigation device 2 basing on one or more of the following factors:
- the operating characteristics of the industrial plant;
- the physical layout of the plant;
- the jobs to be carried out in the industrial plant;
- the activity of other personnel and of possible AGVs operating in the industrial plant.

Preferably, the computerized platform 3 is capable of communicating (e.g. through the Internet or a local on-premise network) with a computerized system 10 (e.g. including a suitable database) of the industrial plant, which is adapted to store and process operation data GD related to the characteristics of the industrial plant, e.g. data related to the position of the pieces of equipment, maps of the physical layout of the industrial plant, data related to routes following by local operators, data related to routes followed by AGVs, and the like.

Preferably, the computerized platform 3 is configured to plan a route to be followed by a user wearing a navigation device 2 basing on operation data GD received from the computerized system 10. To this aim, suitable data processing algorithms of known type may be used.

Preferably, the computerized platform 3 is capable of communicating with a computerized scheduling system 20 of the industrial plant, e.g. through the Internet.

The computerized scheduling system 20 is conveniently adapted to plan a job to be carried out in the industrial plant basing on information received from other computerized systems of the industrial plant (e.g. a maintenance scheduling system) and/or from a distributed control system of the industrial plant.

Preferably, the computerized platform 3 is configured to plan a route to be followed by a user wearing a navigation device 2 basing on job scheduling data SD received from the job scheduling system 20. To this aim, suitable data processing algorithms of known type may be used.

Preferably, the computerized platform 3 is configured to plan or modify the route to be followed by the user of a navigation device 2 basing on tracking data TD indicative of the activity of the personnel and of possible AGVs operating in the industrial plant.

Conveniently, the computerized platform 3 may obtain the tracking data TD by processing information received from a variety of external computerized systems, for example the above-mentioned position detection system 30 and computerized platform 10. To this aim, suitable data processing algorithms of known type may be used.

Preferably, the computerized platform 3 is configured to plan the route to be followed by the user of a navigation device 2 basing on monitoring data MD indicative of the operating conditions of the industrial plant.

Conveniently, the computerized platform 3 may obtain the monitoring data MD by processing information received from a variety of external computerized systems, for example a control system 40 (e.g. a DCS or a SCADA) of the industrial plant. To this aim, suitable data processing algorithms of known type may be used.

Preferably, the computerized platform 3 is configured to modify in real time (i.e. with a short latency time, e.g. few seconds) a planned route for a user of a navigation device 2 basing on monitoring data MD indicative of the operating conditions of the industrial plant.

### EXAMPLARY USE CASE #1

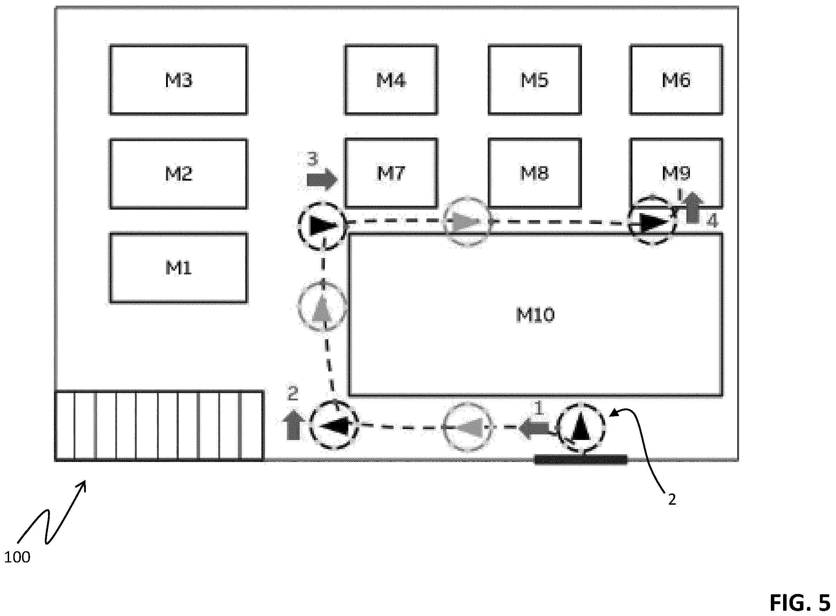

Figure 5 shows a schematic example on how the user of a navigation device 2 may be guided through an industrial plant. In this example, the navigation device 2 is supposed to be of the haptic type, for example of the type shown in figure 2.

The user wearing a navigation device 2 is expected to reach the piece of equipment "M9".

Basing on the guiding information G1 received from the computerised platform 3, the navigation device 2 provides the user with a sequence of physical feedbacks (guiding signals GS).

As shown in the example, the user access to the industrial plant (point #1), according to a given orientation.

As this direction is not correct for reaching the target equipment, an emitter of the navigation device, positioned on the left side of the user, vibrates in order to make the user to turn left.

After having taken the new correct direction, the user can proceed straight forward as no emitter vibrates.

When the user reaches point #2 of the industrial plant, an emitter of the navigation device, positioned on the right side of the user, vibrates in order to make the user to turn right.

After having taken the new correct direction, the user can proceed straight forward as no emitter vibrates.

When the user reaches point #3 of the industrial plant, an emitter of the navigation device, positioned on the right side of the user, vibrates in order to make the user to turn right.

After having taken the new correct direction, the user can proceed straight forward as no emitter vibrates.

When the user reaches the desired piece of equipment (point #4), an emitter of the navigation device, which is positioned on the left side of the user, vibrates in order to orientate the user correctly towards said piece of equipment.

In operation, the computerised platform 3 continuously monitors the position of the user, e.g. by interacting with a localization system 30.

The computerised platform 3 may be in continuous communication with the navigation device 2.

In this way, it can suitably trigger the navigation device 2 to provide the guiding signals exactly when the user reaches some relevant points (points #1 - #4) along the planned route.

As an alternative, the navigation device 2 may download the guiding information G1 from the computerised platform 3 before use. In operation, the navigation device 2 may acquire information on its actual position by communicating with static access-points (local computerised devices) arranged at relevant intermediate points along the planned route.

### EXAMPLARY USE CASE #2

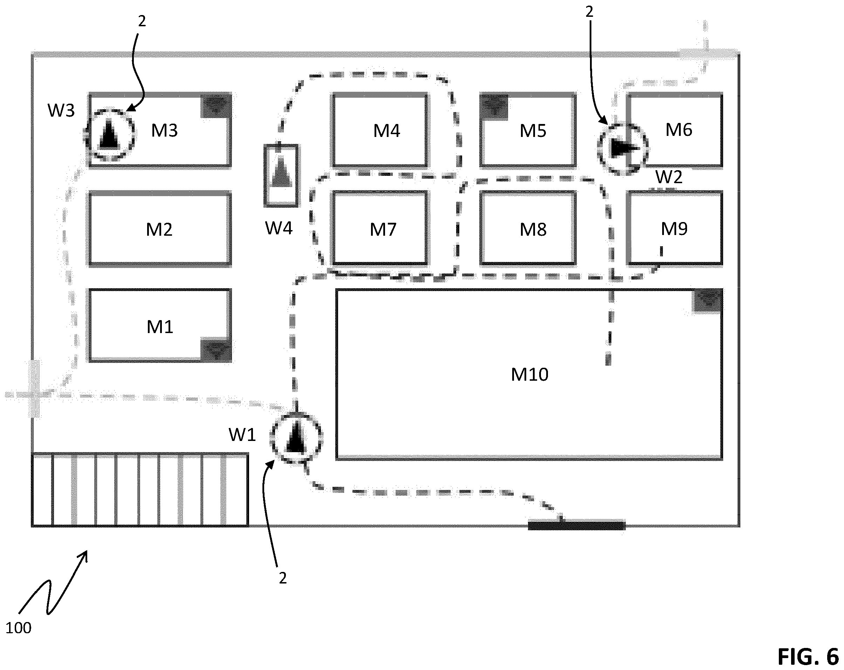

Figure 6 shows a schematic example on how the computerized platform 3 may coordinate the operation of multiple navigation devices 2 worn by users accessing to an industrial plant.

In the example, three human operators W1, W2, W3 and an AGV W4 are supposed to be present in the industrial plant.

Operators W2, W3 are supposed to work at equipment units M3 and M6, operator W1 is supposed to move through the industrial plant to reach the equipment unit M9 (route R1) while the AGV W4 is supposed to travel periodically along an inspection path (route R2).

The central platform 3 monitors the position of the human operators W1, W2, W3 and of the AGV W4. If an operator completes the assigned job and has to exit the industrial plant, the computerised platform plans an exit route for this operator and sends suitable guiding information G1 to the corresponding navigation device 2.

While monitoring the activity of the remaining human and robot operators, the central platform 3 provides the navigation device 2 of the human operator W1 with guiding information G1 to allow said operator to reach the equipment unit M9. As the human operator W1 has to cross the path followed by the AGV W4 in order to reach the equipment unit M9, the computerised platform 3 plans the route of the human operator W1 basing on tracking data TD indicative of the movements of the AGV W4. During the travel to the equipment unit M9 (route R1), the navigation device 2 of the human operator W1 may receive alert signals from equipment units (e.g. the equipment unit 10) present along the planned path. In this way, the user may be advised about the present of hazards or restricted areas or the presence of the AGV W4.

It is now supposed that an emergency situation occurs in the industrial plant, which requires the evacuation of the human operators W1, W2, W3.

In this case, the computer platform 3 receives an alarm signal from a control system (e.g. a SCADA system) of the industrial plant and it provides for guiding the human operators W1, W2, W3 in safe conditions, e.g. towards the closest emergency exits.

The computerised platform 3 sets up new routes (routes R3, R4) for the human operators W1, W2, W3. As an example, in this case, the computerised platform 3 modifies in real time the route R1 initially followed by the human operator W1).

The computer platform 3 sends suitable guiding information G1 to the navigation devices 2 of the human operators W1, W2, W3 in order to guide these latter along the planned new routes. At the same time, it commands the AGV W4 to stop or follow a new emergency route in order not to interfere with the movements of the human operators.

It has been found that the computerized system according to the present invention allows achieving the intended aim and objects.

The computerised system, according to the invention, allows managing the movements of personnel through an industrial plant in a coordinated way. This capability allows reducing waste of time, carrying out activities in the industrial plant in a more efficient and productive manner and increasing safety on site.

Operators can receive instructions for moving through the industrial plant, alerts and other useful information for their job in an automated manner without the need of using hands or interacting with other local operators.

Operators can be automatically routed to a safe location when emergency situations occur in the industrial plant.

The computerised system, according to the invention, is particularly useful for managing the movements of personnel occasionally accessing to the industrial plant, e.g. for maintenance or inspection interventions. However, it may be conveniently adopted for coordinating movements of personnel permanently residing in the industrial plant.

The computerised system, according to the invention, can be easily integrated with other computerised systems of the industrial plant, e.g. with existing locating system, control system, job scheduling systems and the like.

The computerised system, according to the invention, can be implemented in practice easily and at competitive costs.

## Claims

1. A computerised system (1) for managing personnel's movements in an industrial plant, the computerised system comprising:
- one or more navigation devices (2), each comprising a support structure (21) mechanically supporting or accommodating the components of said navigation device and wearable by a user or mechanically couplable to a product item wearable by a user, wherein each navigation device includes a control unit (22) capable of communicating in a wireless mode with a remote or proximal computerised entity and a user-interface unit (24) operatively coupled with said control unit and adapted to provide the user with guiding signals (GS) perceivable by the user and configured to direct the user according to predefined directions;
- a computerised platform (3) capable of communicating in a wireless mode with said navigation devices, said computerised platform being configured to control and coordinate the operation of said navigation devices;
wherein, said computerised platform (3) is configured to provide the control unit (22) of each navigation device with first guiding information (G1) in order to guide the user of said navigation device along a planned route through said industrial plant;
wherein, the control unit (22) of said navigation device is configured to command, based on said first guiding information (G1), the user-interface unit (24) of said navigation device to provide the user of said navigation device with said guiding signals (GS) according to a sequential order in such a way to direct the user of said navigation device along said planned route;
wherein said computerised platform (3) is configured to modify said planned route to be followed by the user wearing one of said navigation devices (2) based on tracking data (TD) indicative of the movements of other personnel and of the movements of possible automatic guided vehicles operating in said industrial plant.

2. A computerised system, according to claim 1, **characterised in that** said user-interface unit (24) comprises a haptic user-interface (241).

3. A computerised system, according to one or more of the previous claims, **characterised in that** said user-interface unit (24) comprises a visual user-interface (242).

4. A computerised system, according to claim 3, **characterised in that** said visual interface device (24) comprises an augmented-reality user-interface.

5. A computerised system, according to claim 3, **characterised in that** said visual interface device (24) comprises a virtual reality user-interface.

6. A computerised system, according to one or more of the previous claims, **characterised in that** said user-interface unit (24) comprises an acoustic user-interface.

7. A computerised system, according to one or more of the previous claims, **characterised in that** each navigation device (2) comprises one or more biometric sensors (23) adapted to provide said control unit (22) with detection data (SS) indicative of the physical conditions of the user of said navigation device, said control unit (22) being configured to transmit said detection data to said computerised platform (3).

8. A computerised system, according to one or more of the previous claims, **characterised in that** the control unit (22) of each navigation device (2) is capable of communicating in a wireless mode with the control unit of another navigation device.

9. A computerised system, according to one or more of the previous claims, **characterised in that** the control unit (22) of each navigation device (2) is capable of communicating in a wireless mode with a computerised device installed on a piece of equipment of said industrial plant.

10. A computerised system, according to one of the claims from 3 to 4, **characterised in that** said computerised platform (3) is configured to provide second guiding information (G2) to the control unit (22) of each navigation device (2) in order to guide the user of said navigation device to carry out an intervention on a piece of equipment of said industrial plant,
wherein the control unit (22) of said navigation device is configured to command the user-interface unit (24) of said navigation device to display said second guiding information (G2) to the user.

11. A computerised system, according to one or more of the previous claims, **characterised in that** said computerised platform (3) is configured to track the position of a user wearing one of said navigation devices (2) based on position data (PD) received from a position detection system (10) interacting with said navigation device.

12. A computerised system, according to one or more of the previous claims, **characterised in that** said computerised platform (3) is configured to track the position of a user wearing one of said navigation devices (2) based on operation data (GD) received from a computerised system (10) of said industrial plant.

13. A computerised system, according to one or more of the previous claims, **characterised in that** said computerised platform (3) is configured to plan a route to be followed by a user wearing one of said navigation devices (2) based on job scheduling data (SD) received from a job scheduling system (20) of said industrial plant.

14. A computerised system, according to one or more of the previous claims, **characterised in that** said computerised platform (3) is configured to plan a route to be followed by a user wearing one of said navigation devices (2) based on tracking data (TD) indicative of the movements of other personnel and the movements of possible automatic guided vehicles operating in said industrial plant.

15. A computerised system, according to one or more of the previous claims, **characterised in that** said computerised platform (3) is configured to modify in real time a planned route to be followed by a user wearing one of said navigation devices (2) based on monitoring data (MD) indicative of the operating conditions of said industrial plant.

16. An industrial plant comprising a computerised system, according to one or more of the previous claims.

## Patentansprüche

1. Computergestütztes System (1) zur Verwaltung von Personenbewegungen in einer industriellen Anlage, wobei das computergestützte System Folgendes umfasst:
- eine oder mehrere Navigationsvorrichtungen (2), die jeweils eine Tragstruktur (21) umfassen, die die Komponenten der Navigationsvorrichtung mechanisch trägt oder aufnimmt und von einem Benutzer getragen werden kann oder mechanisch mit einem von einem Benutzer tragbaren Produktposten gekoppelt werden kann, wobei jede Navigationsvorrichtung eine Steuereinheit (22) enthält, die in der Lage ist, in einem drahtlosen Modus mit einer entfernten oder nahen computergestützten Einheit zu kommunizieren, und eine Benutzerschnittstelleneinheit (24), die operativ mit der Steuereinheit gekoppelt ist und so beschaffen ist, dass sie dem Benutzer Leitsignale (GS) bereitstellt, die vom Benutzer wahrgenommen werden können, und dafür ausgebildet ist, den Benutzer gemäß vordefinierten Richtungen zu führen;
- eine computergestützte Plattform (3), die in der Lage ist, drahtlos mit den Navigationsvorrichtungen zu kommunizieren, wobei die computergestützte Plattform dafür ausgebildet ist, die Operation der Navigationsvorrichtungen zu steuern und zu koordinieren;
wobei die computergestützte Plattform (3) ausgebildet ist, um der Steuereinheit (22) jeder Navigationsvorrichtung eine erste Führungsinformation (G1) bereitzustellen, um den Benutzer der Navigationsvorrichtung entlang einer geplanten Route durch die industrielle Anlage zu führen;
wobei die Steuereinheit (22) der Navigationsvorrichtung ausgebildet ist, um auf der Grundlage der ersten Führungsinformation (G1) der Benutzerschnittstelleneinheit (24) der Navigationsvorrichtung zu befehlen, dem Benutzer der Vorrichtung die Führungssignale (GS) gemäß einer sequentiellen Reihenfolge bereitzustellen, um den Benutzer der Navigationsvorrichtung entlang der geplanten Route zu führen;
wobei die computergestützte Plattform (3) dafür ausgebildet ist, die geplante Route, der der Benutzer, der eine der Navigationsvorrichtungen (2) trägt, folgen soll, auf der Grundlage von Verfolgungsdaten (TD) zu modifizieren, die die Bewegungen anderer Personen und die Bewegungen möglicher automatisch geführter Fahrzeuge anzeigen, die in der industriellen Anlage betrieben werden.

2. Computergestütztes System nach Anspruch 1, **dadurch gekennzeichnet, dass** die Benutzerschnittstelleneinheit (24) eine haptische Benutzerschnittstelle (241) umfasst.

3. Computergestütztes System nach einem oder mehreren der vorhergehenden Ansprüche, **dadurch gekennzeichnet, dass** die Benutzerschnittstelleneinheit (24) eine visuelle Benutzerschnittstelle (242) umfasst.

4. Computergestütztes System nach Anspruch 3, **dadurch gekennzeichnet, dass** die Vorrichtung für die visuelle Schnittstelle (24) eine Benutzerschnittstelle mit erweiterter Realität umfasst.

5. Computergestütztes System nach Anspruch 3, **dadurch gekennzeichnet, dass** die Vorrichtung für die visuelle Schnittstelle (24) eine Benutzerschnittstelle für virtuelle Realität umfasst.

6. Computergestütztes System nach einem oder mehreren der vorhergehenden Ansprüche, **dadurch gekennzeichnet, dass** die Benutzerschnittstelleneinheit (24) eine akustische Benutzerschnittstelle umfasst.

7. Computergestütztes System nach einem oder mehreren der vorhergehenden Ansprüche, **dadurch gekennzeichnet, dass** jede Navigationsvorrichtung (2) einen oder mehrere biometrische Sensoren (23) umfasst, die so beschaffen sind, dass sie der Steuereinheit (22) Erkennungsdaten (SS) bereitstellen, die Angaben über den physischen Zustand des Benutzers der Navigationsvorrichtung enthalten, wobei die Steuereinheit (22) dafür ausgebildet ist, die Erkennungsdaten an die computergestützte Plattform (3) zu übertragen.

8. Computergestütztes System nach einem oder mehreren der vorhergehenden Ansprüche, **dadurch gekennzeichnet, dass** die Steuereinheit (22) jeder Navigationsvorrichtung (2) in der Lage ist, drahtlos mit der Steuereinheit einer anderen Navigationsvorrichtung zu kommunizieren.

9. Computergestütztes System nach einem oder mehreren der vorhergehenden Ansprüche, **dadurch gekennzeichnet, dass** die Steuereinheit (22) jeder Navigationsvorrichtung (2) in der Lage ist, in einem drahtlosen Modus mit einer computergestützten Vorrichtung zu kommunizieren, die an einem Ausrüstungsteil der industriellen Anlage installiert ist.

10. Computergestütztes System nach einem der Ansprüche 3 bis 4, **dadurch gekennzeichnet, dass** die computergestützte Plattform (3) ausgebildet ist, um der Steuereinheit (22) jeder Navigationsvorrichtung (2) eine zweite Führungsinformation (G2) bereitzustellen, um den Benutzer der Navigationsvorrichtung zu führen, damit er einen Eingriff an einem Ausrüstungsteil der industriellen Anlage vornimmt,
wobei die Steuereinheit (22) der Navigationsvorrichtung dafür ausgebildet ist, der Benutzerschnittstelleneinheit (24) der Navigationsvorrichtung zu befehlen, dem Benutzer die zweite Führungsinformation (G2) anzuzeigen.

11. Computergestütztes System nach einem oder mehreren der vorhergehenden Ansprüche, **dadurch gekennzeichnet, dass** die computergestützte Plattform (3) dafür ausgebildet ist, die Position eines Benutzers, der eine der Navigationsvorrichtungen (2) trägt, auf der Grundlage von Positionsdaten (PD) zu verfolgen, die von einem Positionserkennungssystem (10) empfangen werden, das mit der Navigationsvorrichtung interagiert.

12. Computergestütztes System nach einem oder mehreren der vorhergehenden Ansprüche, **dadurch gekennzeichnet, dass** die computergestützte Plattform (3) dafür ausgebildet ist, die Position eines Benutzers, der eine der Navigationsvorrichtungen (2) trägt, auf der Grundlage von Betriebsdaten (GD) zu verfolgen, die von einem computergestützten System (10) der industriellen Anlage empfangen werden.

13. Computergestütztes System nach einem oder mehreren der vorhergehenden Ansprüche, **dadurch gekennzeichnet, dass** die computergestützte Plattform (3) dafür ausgebildet ist, eine von einem Benutzer, der eine der Navigationsvorrichtungen (2) trägt, zu befolgende Route auf der Grundlage von Auftragsplanungsdaten (SD) zu planen, die von einem Auftragsplanungssystem (20) der industriellen Anlage empfangen werden.

14. Computergestütztes System nach einem oder mehreren der vorhergehenden Ansprüche, **dadurch gekennzeichnet, dass** die computergestützte Plattform (3) dafür ausgebildet ist, eine von einem Benutzer, der eine der Navigationsvorrichtungen (2) trägt, zu befolgende Route zu planen, und zwar auf der Grundlage von Verfolgungsdaten (TD), die Angaben über die Bewegungen anderer Personen und die Bewegungen möglicher automatisch geführter Fahrzeuge, die in der industriellen Anlage arbeiten, enthalten.

15. Computergestütztes System nach einem oder mehreren der vorhergehenden Ansprüche, **dadurch gekennzeichnet, dass** die computergestützte Plattform (3) ausgebildet ist, um in Echtzeit eine geplante Route zu modifizieren, die von einem Benutzer, der eine der Navigationsvorrichtungen (2) trägt, auf der Grundlage von Überwachungsdaten (MD), die die Betriebsbedingungen der industriellen Anlage angeben, zu folgen ist.

16. Industrielle Anlage, umfassend ein computergestütztes System, nach einem oder mehreren der vorhergehenden Ansprüche.

## Revendications

1. Système informatisé (1) pour la gestion des mouvements du personnel dans une installation industrielle, le système informatisé comprenant :
- un ou plusieurs dispositifs de navigation (2), chacun comprenant une structure de support (21) supportant ou accueillant mécaniquement les composants dudit dispositif de navigation et pouvant être portés par un utilisateur ou couplés mécaniquement à un article pouvant être porté par un utilisateur, chaque dispositif de navigation comprenant une unité de commande (22) capable de communiquer en mode sans fil avec une entité informatisée distante ou de proximité et une unité d'interface utilisateur (24) couplée de manière opérationnelle avec ladite unité de commande et adaptée pour fournir à l'utilisateur des signaux de guidage (GS) perceptibles par l'utilisateur et configurés pour diriger l'utilisateur selon des directions prédéfinies ;
- une plateforme informatisée (3) capable de communiquer en mode sans fil avec lesdits dispositifs de navigation, ladite plateforme informatisée étant configurée pour contrôler et coordonner le fonctionnement desdits dispositifs de navigation ;
dans lequel, ladite plateforme informatisée (3) est configurée pour fournir à l'unité de commande (22) de chaque dispositif de navigation une première information de guidage (G1) afin de guider l'utilisateur dudit dispositif de navigation le long d'un itinéraire planifié à travers ladite installation industrielle ;
dans lequel, l'unité de commande (22) dudit dispositif de navigation est configurée pour commander, sur la base desdites premières informations de guidage (G1), l'unité d'interface utilisateur (24) dudit dispositif de navigation pour fournir à l'utilisateur dudit dispositif de navigation lesdits signaux de guidage (GS) selon un ordre séquentiel de manière à diriger l'utilisateur dudit dispositif de navigation le long dudit itinéraire planifié ;
dans lequel ladite plateforme informatisée (3) est configurée pour modifier ledit itinéraire planifié à suivre par l'utilisateur portant l'un desdits dispositifs de navigation (2) sur la base des données de suivi (TD) indicatives des mouvements d'autres personnels et des mouvements d'éventuels véhicules à guidage automatique opérant dans ladite installation industrielle.

2. Système informatisé, selon la revendication 1, **caractérisé en ce que** ladite unité d'interface utilisateur (24) comprend une interface utilisateur haptique (241).

3. Système informatisé, selon une ou plusieurs des revendications précédentes, **caractérisé en ce que** ladite unité d'interface utilisateur (24) comprend une interface utilisateur visuelle (242).

4. Système informatisé, selon la revendication 3, **caractérisé en ce que** ledit dispositif d'interface visuelle (24) comprend une interface utilisateur à réalité augmentée.

5. Système informatisé, selon la revendication 3, **caractérisé en ce que** ledit dispositif d'interface visuelle (24) comprend une interface utilisateur de réalité virtuelle.

6. Système informatisé, selon une ou plusieurs des revendications précédentes, **caractérisé en ce que** ladite unité d'interface utilisateur (24) comprend une interface utilisateur acoustique.

7. Système informatisé, selon une ou plusieurs des revendications précédentes, **caractérisé en ce que** chaque dispositif de navigation (2) comprend un ou plusieurs capteurs biométriques (23) adaptés pour fournir à ladite unité de contrôle (22) des données de détection (SS) indicatives des conditions physiques de l'utilisateur dudit dispositif de navigation, ladite unité de contrôle (22) étant configurée pour transmettre lesdites données de détection à ladite plateforme informatisée (3).

8. Système informatisé, selon une ou plusieurs des revendications précédentes, **caractérisé en ce que** l'unité de commande (22) de chaque dispositif de navigation (2) est capable de communiquer en mode sans fil avec l'unité de commande d'un autre dispositif de navigation.

9. Système informatisé, selon une ou plusieurs des revendications précédentes, **caractérisé en ce que** l'unité de commande (22) de chaque dispositif de navigation (2) est capable de communiquer en mode sans fil avec un dispositif informatisé installé sur un équipement de ladite installation industrielle.

10. Système informatisé, selon une des revendications 3 et 4, **caractérisé en ce que** ladite plateforme informatisée (3) est configurée pour fournir une deuxième information de guidage (G2) à l'unité de commande (22) de chaque dispositif de navigation (2) afin de guider l'utilisateur dudit dispositif de navigation pour effectuer une intervention sur un équipement de ladite installation industrielle,
l'unité de commande (22) dudit dispositif de navigation étant configurée pour commander à l'unité d'interface utilisateur (24) dudit dispositif de navigation d'afficher ladite deuxième information de guidage (G2) à l'attention de l'utilisateur.

11. Système informatisé, selon une ou plusieurs des revendications précédentes, **caractérisé en ce que** ladite plateforme informatisée (3) est configurée pour suivre la position d'un utilisateur portant l'un desdits dispositifs de navigation (2) sur la base de données de position (PD) reçues d'un système de détection de position (10) interagissant avec ledit dispositif de navigation.

12. Système informatisé, selon une ou plusieurs des revendications précédentes, **caractérisé en ce que** ladite plateforme informatisée (3) est configurée pour suivre la position d'un utilisateur portant l'un desdits dispositifs de navigation (2) sur la base de données de fonctionnement (GD) reçues d'un système informatisé (10) de ladite installation industrielle.

13. Système informatisé, selon une ou plusieurs des revendications précédentes, **caractérisé en ce que** ladite plateforme informatisée (3) est configurée pour planifier un itinéraire à suivre par un utilisateur portant l'un desdits dispositifs de navigation (2) sur la base de données de programmation de tâches (SD) reçues d'un système de programmation de tâches (20) de ladite installation industrielle.

14. Système informatisé, selon une ou plusieurs des revendications précédentes, **caractérisé en ce que** ladite plateforme informatisée (3) est configurée pour planifier un itinéraire à suivre par un utilisateur portant l'un desdits dispositifs de navigation (2) sur la base de données de suivi (TD) indicatives des mouvements d'autres personnels et des mouvements d'éventuels véhicules à guidage automatique opérant dans ladite installation industrielle.

15. Système informatisé, selon une ou plusieurs des revendications précédentes, **caractérisé en ce que** ladite plateforme informatisée (3) est configurée pour modifier en temps réel un itinéraire planifié à suivre par un utilisateur portant l'un desdits dispositifs de navigation (2) sur la base des données de suivi (MD) indicatives des conditions de fonctionnement de ladite installation industrielle.

16. Installation industrielle comprenant un système informatisé selon une ou plusieurs des revendications précédentes.
